# EUROPEAN PATENT SPECIFICATION

(11) **EP 4 403 837 B1**
(45) Date of publication and mention of the grant of the patent: **01.10.2025**
(21) Application number: 23152660.9
(22) Date of filing: 20.01.2023
(51) Int. Cl.: F24D 19/10, G05D 16/06

(54) **A VALVE ARRANGEMENT WITH A DIFFERENTIAL PRESSURE CONTROLLER**
VENTILANORDNUNG MIT EINEM DIFFERENZDRUCKREGLER
AGENCEMENT DE SOUPAPE AVEC UN RÉGULATEUR DE PRESSION DIFFÉRENTIELLE

(43) Date of publication of application: 24.07.2024
(73) Proprietor: IMI Hydronic Engineering International SA, 1262 Eysins (CH)
(72) Inventor: VOLOVEC, Peter, 8258 Kapele (SI)
(74) Representative: Zacco Sweden AB

(56) References cited:
- WO-A1-2010/090572
- WO-A1-2016/062747
- WO-A1-2016/177874
- WO-A2-2014/150341
- DE-A1- 4 409 121
- US-A1- 2006 081 294

## Description

### TECHNICAL FIELD

The present invention relates to a valve arrangement for controlling a fluid flow. The present invention also relates to a fluid distribution system comprising such a valve arrangement.

### BACKGROUND

Fluid distribution systems, for e.g. heating, cooling and water supply, are designed to feed a fluid from a source to a consumption point. Each consumption point typically has a calculated and designed flow or differential pressure requirement. However, depending on the type of system, the flow requirement is often variable over time and can change with factors like seasonality (e.g. summer or winter), that changes the load from the consumption points, temperature changes of the system fluid, changes in consumption of the system fluid (e.g. for drinking water).

Control valve parts are frequently used in fluid distribution systems and have a variable opening such that the flow rates can be controlled. Because a control valve part may operate during varying system conditions, the control valve part may be complemented with a differential pressure valve part. An example of such a combined control valve part and differential pressure valve part is known from WO 2010/090572 A1. The differential pressure valve part limits the differential pressure over the control valve part. Therefore, the operating conditions for the control valve part may be maintained at an adequate level despite variations of the pressure level in the entire fluid distribution system.

When a valve arrangement, comprising e.g. a control valve part and/or a differential pressure valve part, is to be installed in a fluid distribution system, the person installing the valve arrangement normally measures the fluid pressure at the valve inlet, in order to correctly calibrate the valve arrangement. However, the best way to verify various functions of such valve arrangement during installment and/or during operation remains an open-ended question.

### SUMMARY

An object of the present invention is to alleviate the drawbacks of the prior art. In particular, an object is to provide improved ways of verifying functionality of a valve arrangement. This object is at least in part achieved by a valve arrangement for controlling fluid flow. The valve arrangement comprises a valve body having a valve inlet and a valve outlet, and a differential pressure controller comprising a movable membrane having a first membrane side and a second membrane side arranged on an opposite side to the first membrane side. The first membrane side is arranged in fluid communication with the valve inlet, and the second membrane side is arranged in fluid communication with the valve outlet. The differential pressure controller further comprises a spring element arranged to exert a force on the movable membrane and arranged to hold the movable membrane in an end position when a differential pressure between the first and the second membrane sides is below a threshold value. The differential pressure controller is configured such that the movable membrane is movable in response to the differential pressure when the differential pressure is above the threshold value, and such that movement of the movable membrane counteracts pressure variations between the valve inlet and a valve outlet. The valve arrangement further comprises an inspection passage configured to receive fluid from the valve inlet or the valve outlet when the differential pressure is above the threshold value. The differential pressure controller is configured to close the inspection passage when the differential pressure is below the threshold value. Thus, presence of fluid in the inspection passage is indicative of the differential pressure being above the threshold value.

It is particularly desired to verify the functionality of the differential pressure controller to make sure that the valve arrangement operates under good authority. The inspection passage allows verification of the functionality of the differential pressure controller during instalment and operation of the valve arrangement. An installation of a fluid distribution system might entail numerous valve arrangements, and their commissioning can be fastidious. Thanks to the inspection passage, an operator can quickly ensure, without any tool, that the differential pressure is sufficient, i.e. enough to overcome the threshold, at every valve arrangement.

If the threshold for the differential pressure is not reached, forces acting on the movable membrane caused by the difference of pressure in between the valve inlet and valve outlet are not sufficient to overcome a force from the spring element and possible friction forces. In that case, the movable membrane remains in its end position. This means that the differential pressure controller is not activated, and that the valve arrangement does not function as desired. Presence of fluid in the inspection passage is indicative of the differential pressure being above the threshold value, and is therefore also indicative of the differential pressure controller being activated.

According to some aspects, the inspection passage is configured to guide a flow of fluid from the valve inlet or the valve outlet to an outside of the valve body when the differential pressure is above the threshold value. The fluid exiting the valve body from the inspection passage provides a visual indication that the differential pressure is above the threshold value. If the fluid is a liquid, the inspection passage may advantageously be dimensioned such that droplets of liquid exit the inspection passage when the differential pressure is above the threshold value. Droplets are sufficient for the visual inspection and waste a minimal amount of liquid.

According to some aspects, the valve arrangement further comprises a sealing member arranged movable between an open position and a closed position. The sealing member in its closed position is configured to prevent fluid flowing out from the valve body via the inspection passage. The sealing member in its open position is configured to allow fluid flowing out from the valve body via the inspection passage. Once it has been verified that the differential pressure is above the threshold value, it may be desired to the stop fluid from exiting through the inspection passage. The sealing member provides a convenient way of stopping fluid from exiting through the inspection passage when it is not desired to verify the functionality of the differential pressure controller.

According to some aspects, the sealing member is arranged manually movable between the open position and the closed position. This way, an operator may conveniently open and close the inspection passage. For example, the sealing member may be rotatably arranged in the valve body.

According to some aspects, the sealing member comprises a conduit extending through the sealing member. The conduit is in fluid communication with the inspection passage when the sealing member is in its open position, and wherein the conduit is fluidly isolated from the inspection passage when the sealing member is in its closed position. With such conduit, only a small movement of the sealing member is necessary to move it from its opened to its closed position. Here, "small" may be in relation to the dimension of the sealing member.

According to some aspects, the valve arrangement further comprises a movable indicator arranged movable in the inspection passage. The movable indicator is arranged in a first position when the differential pressure is above the threshold value and in a second position when the differential pressure is below the threshold value. The position of the movable indicator is configured to provide visual indication from an outside of the valve body of the differential pressure being above the threshold value. The movable indicator does not require any fluid exiting the inspection passage when verification of the differential pressure being above the threshold value is desired. Consequently, the movable indicator may be the preferred means for indication in some scenarios.

According to some aspects, the movable membrane when in its end position is arranged to seal a passage inlet of the inspection passage. This movable membrane can advantageously provide a good seal such that fluid cannot enter into the inspection passage. Alternatively, the differential pressure controller may comprise other means arranged to close the inspection passage when the differential pressure is below the threshold value, such as a member acting on the passage inlet of the inspection passage. The member acting on the passage inlet may be connected to the movable membrane such that the member follows the movement of the movable membrane.

According to some aspects, the differential pressure controller comprises a closing arrangement configured to change a variable cross section of a passage between the valve inlet and the valve outlet. The closing arrangement may be in the form of a cup acting as a shutter, rotary valves, sliding valves, or other arrangements configured to change the variable cross section. The closing arrangement reduces fluctuations in the pressure difference across the valve arrangement or even keeps the pressure difference constant.

According to some aspects, the closing arrangement is a first closing arrangement. In that case, the valve arrangement may further comprise a control valve part provided with a second closing arrangement configured to change a variable cross section of passage between the valve inlet and the valve outlet. This way, fluid flow through the valve arrangement, from the valve inlet to the valve outlet, can be controlled. For example, the second closing arrangement may comprise a seat and a closing member. In that case, the second closing arrangement is configured to change a variable cross section of a passage between the valve inlet and the valve outlet by means of the closing member acting on the seat. Additionally, the closing member may be adjustable with an actuating spindle passing through the valve body.

According to some aspects, the valve body is provided with one or more measuring connections for measuring pressure and/or temperature. Such measurements may be desired as during installment and operation of the valve arrangement.

There is also disclosed herein a fluid distribution system comprising a valve arrangement according to the discussions above. The fluid distribution system is associated with the above-discussed advantages.

Generally, all terms used in the claims are to be interpreted according to their ordinary meaning in the technical field. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description.

### BRIEF DESCRIPTION OF THE DRAWINGS

With reference to the appended drawings, below follows a more detailed description of embodiments of the present invention cited as examples. In the drawings:
Figures 1-3 schematically illustrate valve arrangements;
Figures 4-6 illustrate a valve arrangement; and
Figure 7 illustrates a fluid distribution system.

### DETAILED DESCRIPTION

The present invention is described more fully below with reference to the accompanying drawings, in which certain aspects of the present disclosure are shown. The present disclosure may, however, be embodied in many different forms and should not be construed as limited to the embodiments and aspects set forth herein.

It is to be understood that the present invention is not limited to the embodiments described herein and illustrated in the drawings; rather, the skilled person will recognize that many changes and modifications may be made within the scope of the appended claims.

When fluid travels through a valve arrangement, the fluid flow normally flows through a nominal cross-sectional area at the valve inlet and at the valve outlet. However, there is normally a reduction in the available cross-sectional area for the fluid flow inside the valve arrangement. This reduction causes a pressure drop across the valve arrangement. In other words, there is a first pressure of the fluid at the valve inlet and a second pressure at the valve outlet.

Differential pressure control mechanisms integrated in control valves typically require a minimum differential pressure to be operating. If the minimum differential pressure is not reached, the differential pressure controller will not operate, and an intentional nominal flow of the valve will not be reached. The present disclosure therefore provides a valve arrangement 100 with means to indicate available differential pressure.

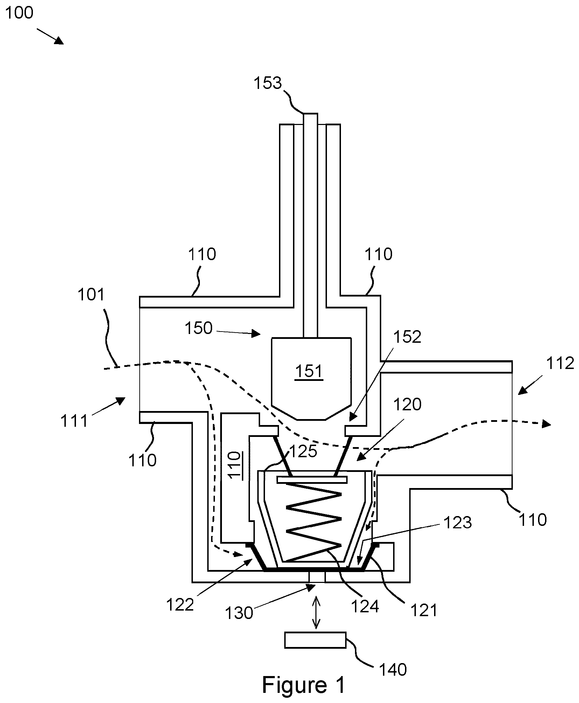

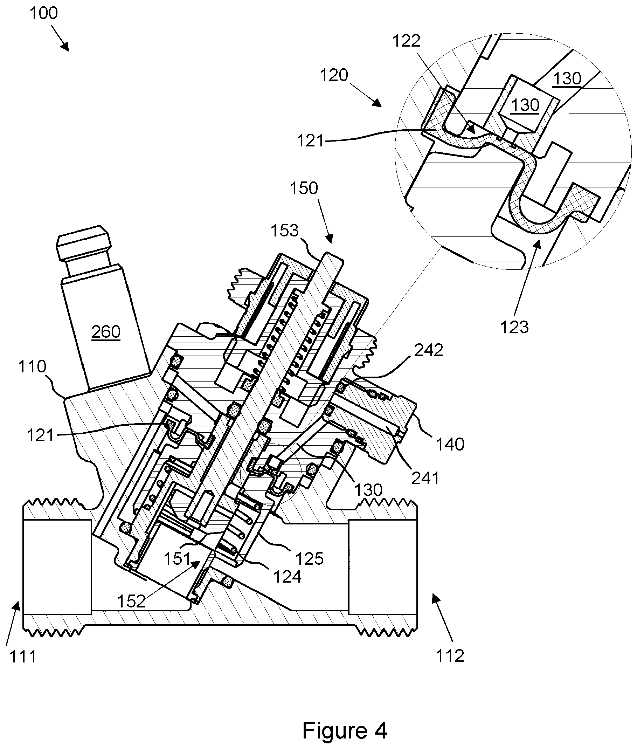

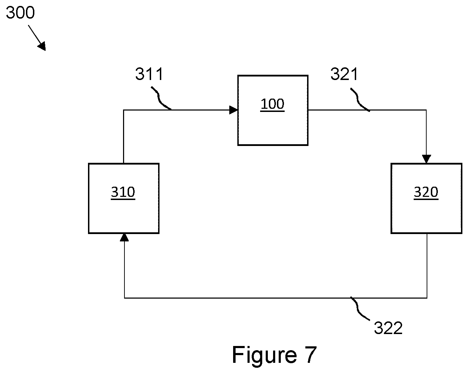

Figures 1-3 schematically illustrate example valve arrangements 100, Figure 4-6 illustrate an example valve arrangement 100 in different operating states, and Figure 7 illustrates a fluid distribution system 300 comprising the disclosed valve arrangement 100. The disclosed valve arrangement is suitable for fluids, and is particularly suitable for liquids such as water.

The disclosed valve arrangement 100 comprises a valve body 110 having a valve inlet 111 and a valve outlet 112. The valve outlet 112 is arranged downstream of the valve inlet 111. The valve arrangement 100 is arranged to control a fluid flow between the valve inlet 111 and the valve outlet 112.

The valve arrangement 100 further comprises a differential pressure controller 120 comprising a movable membrane 121 having a first membrane side 122 and a second membrane side 123 arranged on an opposite side to the first membrane side 122. The first membrane side 122 is arranged in fluid communication with the valve inlet 111, and the second membrane side 123 is arranged in fluid communication with the valve outlet 112.

In Figures 1-3, arrow 101 indicates a fluid path from the valve inlet 111 to the valve outlet 112. As can be seen, some of the fluid is directed at the inlet towards the first membrane side 122 and some of the fluid is directed at the outlet towards the second membrane side 123.

The fluid communication between the first membrane side 122 and the valve inlet 111 leads to a first pressure to the movable membrane 121, resulting in a first force which is the product of the first pressure and the area of the first membrane side 122 subjected to the first pressure. Similarly, the fluid communication between the second membrane side 123 and the valve outlet 112 lead so a second pressure to the movable membrane 121, resulting in a second force which is the product of the second pressure and the area of the second membrane side 123 subjected to the second pressure. A difference between the first and the second forces controls the movement of the movable membrane 121 relative to the valve body 110.

The movable membrane 121 is movable relative to the valve body 110. The movable membrane 121 is preferably a flexible membrane. In that case, the movable membrane 121 is preferably made of an elastomeric material.

The movable membrane 121 acts as a barrier between the high-pressure valve inlet 111 relative to the low-pressure valve outlet 112. The fluid communication between the valve inlet 111 and the first membrane side 122 may be provided by a passage/conduit arranged in the valve body 110 in connection to the valve inlet 111. Similarly, the fluid communication between the valve outlet 112 and the second membrane side 123 may be provided by a passage/conduit arranged in the valve body 110 in connection to the valve outlet 112. These passage/conduit are small relative to the valve inlet 111 and valve outlet 112. When fluid flows through the valve arrangement 100, i.e., from the valve inlet 111 to the valve outlet 112, some fluid will flow into the passages/conduits to the movable membrane 121.

In the examples of Figures 1-3, the circumference of the movable membrane 121 is attached to the valve body 110, and the remainder of the movable membrane 121 is movable relative to the attachment points. The example valve arrangement 100 of Figures 4-6 show a similar configuration. The movable membrane 121 may also be called a diaphragm. The movable membrane 121 may be a so called rolling diaphragm with constant effective area, which can perform a large stroke in a small space.

The differential pressure controller 120 further comprises a spring element 124 arranged to exert a force on the movable membrane 121 and arranged to hold the movable membrane 121 in an end position when a differential pressure between the first and the second membrane sides 122,123 is below a threshold value. The end position represents the furthermost that the movable membrane 121 can move in one direction. In other words, the movable membrane 121 is in a limit state when in its end position. The differential pressure controller 120 is configured such that the movable membrane 121 is movable in response to the differential pressure when the differential pressure is above the threshold value, and such that movement of the movable membrane 121 counteracts pressure variations between the valve inlet 111 and a valve outlet 112. In other words, the movement of the movable membrane 121 compensates for fluctuations in pressure across the valve arrangement 100.

The spring element 124 may comprise a coil spring, as is shown in the example valve arrangements 100 in Figures 1-6. In Figures 1-3, it can be seen that spring element 124 is attached to a support frame, which in turn is attached to the valve body 110. In general, the spring element 124 may comprise any resilient and/or elastic material exerting a third force onto the movable membrane 121 such that the movable membrane 121 is held in its end position. A direction of the third force is at least partly the same as a direction of the second force discussed above. Thus, the third force from the spring element 124 and the second force act in common on the movable membrane 121. The spring element 124 thereby adjusts the equilibrium point of movable membrane 121 when the movable membrane 121 is moving.

The differential pressure controller 120 may comprise a closing arrangement 125 configured to change a variable cross section of a passage between the valve inlet 111 and the valve outlet 112.

In the example valve arrangement 100 in Figures 1-3, the closing arrangement 125 comprises a cup acting as a shutter. The example valve arrangement 100 in Figures 4-6 also has a closing arrangement 125 comprising a cup acting as a shutter. The cup is attached to the movable membrane 121 and is arranged such that it can move back and forth (substantially up and down in Figures 1-6) to reduce or increase the fluid flow from the valve inlet 111 to the valve outlet 112. In some examples, the closing arrangement 125 is arranged to move into a position that completely blocks the fluid flow. The fluid flow is controlled by adjusting the area available for the fluid to pass through. The pressure of the fluid coming into the inlet and thereby to the first side of the movable membrane 121 will force the membrane, and consequently the cup, to move. This reduces fluctuations in the pressure difference across the valve arrangement 100 or even keeps the pressure difference constant.

The closing arrangement 125 may alternatively comprise rotary valves, sliding valves, or other arrangements configured to change the variable cross section.

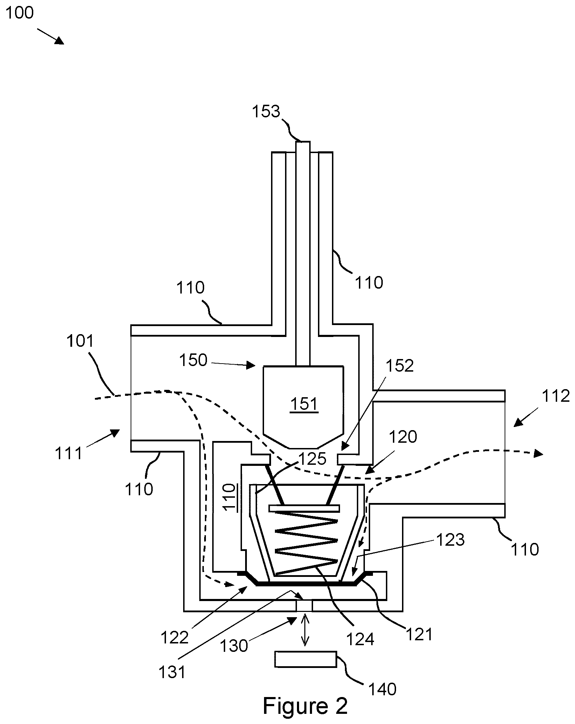

In Figure 1, the movable membrane 121 is in its end position. In Figure 2, the movable membrane 121 has moved away from its end position. It can be seen that the position of closing arrangement 125 in Figure 1 allows a larger fluid flow compared to the position of closing arrangement 125 in Figure 2.

The force on the movable membrane 121 exerted by the spring element 124 holds the movable membrane 121 in its end position when no fluid is flowing through the valve arrangement 100. As fluid starts to flow through the valve arrangement 100, the fluid may eventually cause the differential pressure between the first and the second membrane sides 122, 123 to overcome the force exerted on the movable membrane 121 by the spring element 124 and any friction forces. When that force is overcome, the movable membrane 121 will move in response to the differential pressure. In other words, the threshold vale of the differential pressure is corresponds to when the differential pressure generates a force on the movable membrane 121 higher than the force resulting from the spring element 124 and any friction forces. The threshold value is thus a function of the spring force of the spring element 124. The threshold value may also be a function of wearing of elements in the valve arrangement affecting the friction forces, such as gaskets.

A problem for a person, such as an operator of a valve system or a person installing valve arrangements 100, is that it is difficult to know if the differential pressure controller 120 is functioning properly. One way to verify the functionality of the differential pressure controller 120 is to measure properties of the fluid flow. This, however, requires measurement equipment and takes time, which is undesired.

The disclosed valve arrangement 100 therefore comprises an inspection passage 130 configured to receive fluid from the valve inlet 111 or the valve outlet 112 when the differential pressure is above the threshold value. In addition, the differential pressure controller 120 is configured to close the inspection passage 130 when the differential pressure is below the threshold value. Consequently, presence of fluid in the inspection passage 130 is indicative of the differential pressure being above the threshold value.

The inspection passage 130 is an entry which fluid can access when the differential pressure is above the threshold value. When the differential pressure is below the threshold value, fluid cannot access the inspection passage 130. The inspection passage 130 allows verification of the functionality of the differential pressure controller 120 during instalment and operation. An installation of a fluid distribution system might entail numerous valve arrangements 100, and their commissioning can be fastidious. Thanks to the inspection passage 130, the operator can ensure quickly, without any tool, that the available differential pressure is sufficient at every valve.

The inspection passage 130 may be configured to guide a flow of fluid from the valve inlet 111 or the valve outlet 112 to an outside of the valve body 110 when the differential pressure is above the threshold value. When the differential pressure is above the threshold value, the inspection passage 130 is accessible and fluid will flow through the inspection passage 130 from an inside of the valve body 110 to an outside of the valve body 110. When the differential pressure is above the threshold value, the inspection passage 130 is inaccessible and there is no flow of fluid through the inspection passage 130. Consequently, it is possible to visibly verify the functionality of the differential pressure controller 120. If an operator sees fluid exiting the inspection passage 130, such as liquid dropping from the inspection passage 130 if the fluid is a liquid, the functionality of the differential pressure controller 120 has been verified to function as intended.

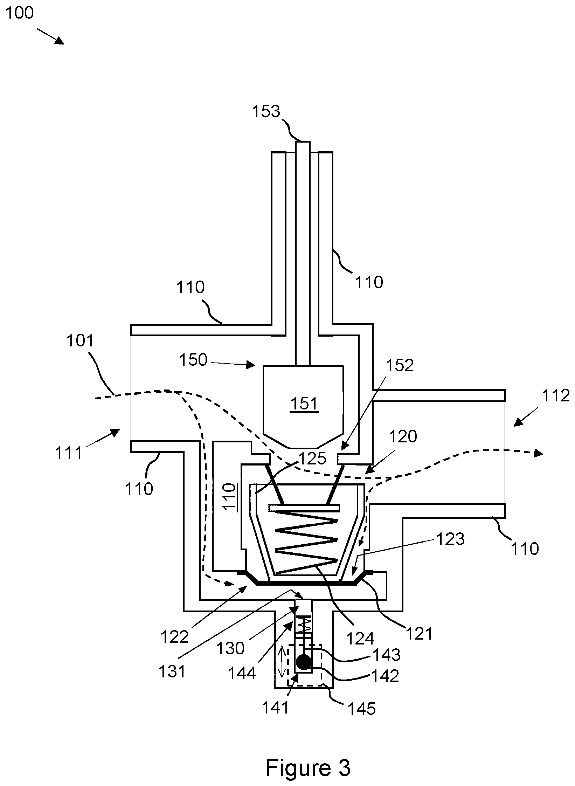

The example valve arrangement 100 in Figures 1 and 2 and the example valve arrangement 100 of Figures 4-6 show inspection passages 130 configured to guide fluid from an inside of the valve body 110 to an outside of the valve body 110. The example valve arrangement 100 in Figure 3 comprises an inspection passage 130 with an alternative means for visually detecting presence of fluid in the inspection passage 130, which is discussed in more detail below. Presence of fluid in the inspection passage 130 can be detected in several other ways as well. For example, the inspection passage 130 may comprise an electrical sensor configured to detect presence of a fluid. Such sensor may be accompanied by a light source configured to be in an on-state if the sensor detects fluid, and configured to be in an off-state otherwise.

It may not be desired to always inspect if the pressure controller 120 functions properly. In particular, with an inspection passage 130 arranged to guide fluid from the inside to the outside of the valve body 110, it may be desired to disable such flow after an inspection has been made. Therefore, the valve arrangement 100 may comprise a sealing member 140 arranged movable between an open position and a closed position. The sealing member 140 is, in its closed position, configured to prevent fluid flowing out from the valve body 110 via the inspection passage 130. In addition, the sealing member 140 is, in its open position, configured to allow fluid flowing out from the valve body 110 via the inspection passage 130. The sealing member 140 thus allows the fluid flow out from the inspection passage 130 to be obstructed. The sealing member 140 member and or the valve body 110 may comprise a gasket 242, which provides an improved seal between the sealing member 140 member and the valve body 110 when the sealing member 140 is in its closed position. Figures 4-6 shows an example a gasket 242 arranged on the sealing member 140.

In the example valve arrangement 100 in Figures 1 and 2, the sealing member 140 is illustrated as a movable lid arranged to seal an output of the inspection passage 130 at an outside of the valve body 110.

In the example valve arrangement 100 in Figures 4-6, the sealing member 140 is rotatably arranged in the valve body 110. This example sealing member 140 comprises a conduit 241 extending through the sealing member 140. The conduit 241 is in fluid communication with the inspection passage 130 when the sealing member 140 is in its open position, and the conduit 241 is fluidly isolated from the inspection passage 130 when the sealing member 140 is in its closed position. When the sealing member is in its open position, the fluid may flow from an inside of the valve body 110 to an outside of the valve body via the inspection passage and via the conduit 241. In general, however, a rotatable sealing member 140 does not require such conduit. A rotatable arranged sealing member 140 provides a convenient way for an operator to prevent fluid flowing out from the valve body 110 via the inspection passage 130 (and via the optional conduit if present) when desired. In addition, the conduit 241 makes it possible that only a small rotation of the sealing member 140 is necessary to move it from its open position to its closed position.

The sealing member 140 may be arranged manually movable between the open position and the closed position. This makes it possible to quickly inspect the functionality of the differential pressure controller 120 when desired. Alternatively, or in combination of, the sealing member 140 may be moved by an actuator.

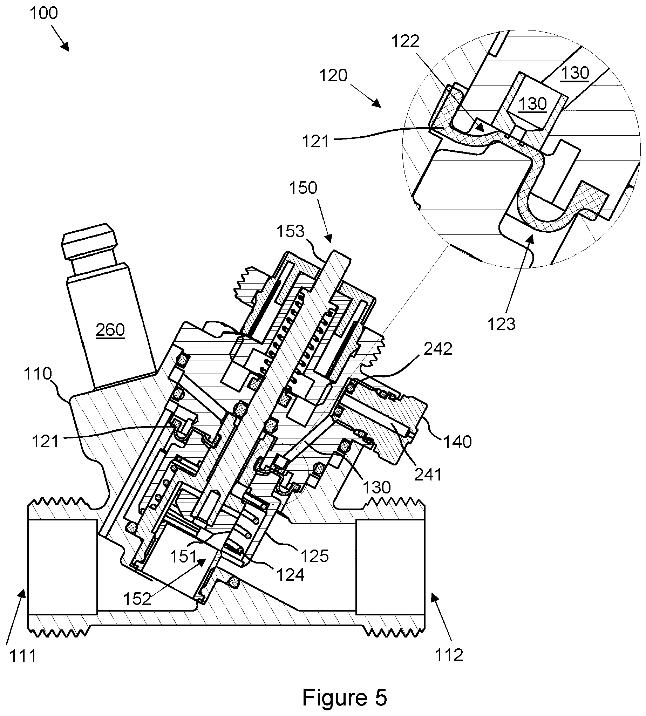

In Figure 4, the sealing member 140 is in its closed position. In Figures 5-6, the sealing member 140 is in its closed position.

Alternatively to the inspection passage 130 being configured to guide fluid from inside the valve body 110 to outside of the valve body 110 (either directly or via the conduit 241), the valve arrangement 100 may comprise a movable indicator 141 arranged movable in the inspection passage 130. An example of such configuration is shown in Figure 3. The movable indicator 141 is arranged in a first position when the differential pressure is above the threshold value and in a second position when the differential pressure is below the threshold value. The movable indicator 141 is arranged such that it is moved from the first position to the second position when fluid is received in the inspection passage 130. The position of the movable indicator 141 is configured to provide visual indication from an outside of the valve body 110 of the differential pressure being above the threshold value.

In Figure 3, the movable indicator 141 comprises a head 142 arranged on a shaft 143. The shaft 143 is connected to an indicator membrane 144. The shaft 143 and the indicator membrane 144 are movably arranged relative to the valve body 110. The indicator membrane 144 is attached to a spring member arranged to push the shaft 143 and the indicator membrane 144 upward in the figure. When fluid enters the inspection passage 130, the fluid leads to a pressure to the indicator membrane, resulting in a force pushing the indicator membrane 144 downward in the figure. The valve body 110 is provided with a transparent section 145, which makes it possible to visually inspect the position of the head 142. Consequently, the movement of the head 142 is indicative of the whether the differential pressure is above the threshold value.

In an alternative example to the one shown in Figure 3, the head 142 is arranged on an outside of the valve body 110, where the indicator membrane 144 seals the inside of the valve body 110 from the outside of the valve body 110. In that case, the transparent section 145 is not needed. The movable membrane 121, when in its end position, may be arranged to seal a passage inlet 131 of the inspection passage 130. In other words, the movable membrane 121 is configured to close the inspection passage 130 when the differential pressure is below the threshold value.

In Figures 1-6, the passage inlet 131 of the inspection passage 130 is arranged such that the first the first membrane side 122 seals the passage inlet 131 when the movable membrane 121 is in its end position. Consequently, the inspection passage 130 is configured to receive fluid from the valve inlet 111. Alternatively, the passage inlet 131 of the inspection passage 130 may be arranged such that the first the second membrane side 123 seals the passage inlet 131 when the movable membrane 121 is in its end position. In that case, the inspection passage 130 is configured to receive fluid from the valve outlet 112. The movable membrane 121 can advantageously provide a good seal such that fluid cannot enter into the inspection passage 130. Alternatively, the differential pressure controller may comprise other means arranged to close the inspection passage 130 when the differential pressure is below the threshold value, such as a member acting on the passage inlet 131 of the inspection passage 130. The member acting on the passage inlet 131 may be connected to the movable membrane 121 such that the member follows the movement of the movable membrane 121.

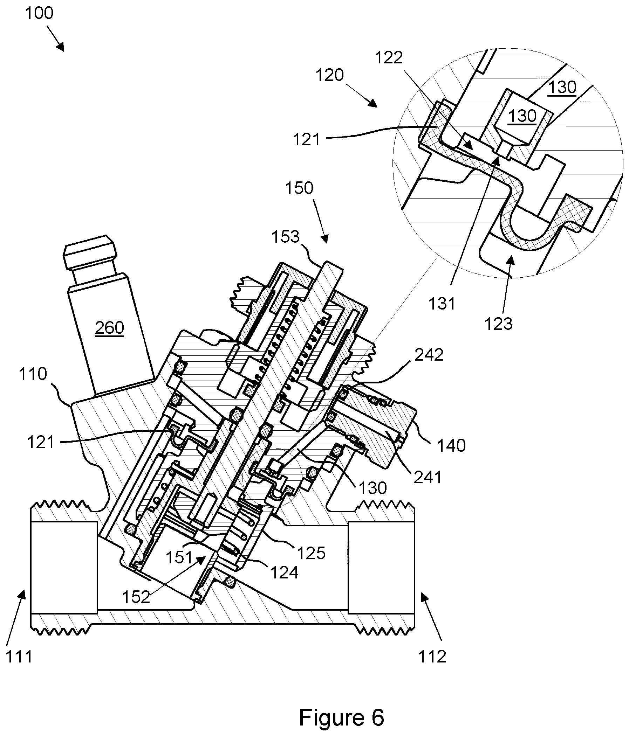

In Figure 1, the movable membrane 121 is in its end position. It can be seen that the movable membrane 121 seals the passage inlet 131 of the inspection passage 130. In Figure 2, the movable membrane 121 is in an open position. It can be seen that the movable membrane 121 is arranged at a position allowing fluid flowing out from the valve body 110 via the inspection passage 130. Similarly, in Figure 4, the movable membrane 121 is in its end position. It can be seen that the movable membrane seals the passage inlet 131 of the inspection passage 130. In Figures 5 and 6, the movable membrane 121 is in an open position. It can be seen that the movable membrane 121 is arranged at a position allowing fluid flowing out from the valve body 110 via the inspection passage 130.

In Figure 4, the sealing member 140 is in its closed position and the movable membrane 121 is in its end position.

In Figure 5, the sealing member 140 is in its open position. In particular, the person has rotated the sealing member 140 to its opened position so that the sealing member 140 enables the possibility of fluid flowing out from the valve body 110 via the inspection passage 130. The movable membrane 121, however, is in its end position and seals the passage inlet 131 of the inspection passage 130 shut, due to the differential pressure being below the threshold value. Consequently, no fluid can get through the inspection passage 130, and no droplets are coming out of the conduit 241 in the sealing member 140.

Figure 6 represents a scenario in which the differential pressure has been increased compared to the case in Figure 5. The increase may be accomplished by e.g. increasing pump head or by reducing upstream flow resistance. In Figure 6, the differential pressure has been increased to the point that the differential pressure is above the threshold value. In other words, the differential pressure has been increased to the point where the differential pressure is sufficient to overcome the force exerted by the spring element 124 and other possible frictional forces. The movable membrane 121 is consequently lifted from its end position, which allows fluid to flow into the passage inlet 131 of the inspection passage 130. A person may now notice that the differential pressure is above the threshold value by the visual indication of fluid (such as droplets of liquid if the fluid is a liquid) coming out from the conduit 241 in the sealing member 140.

The closing arrangement 125 may be referred to as a first closing arrangement. In that case, the valve arrangement 100 may further comprises a control valve part 150 provided with a second closing arrangement configured to change a variable cross section of passage between the valve inlet 111 and the valve outlet 112. The second closing arrangement has open positions and may have a closed position. In the closed position no fluid is allowed to flow through the valve arrangement 100 from the valve inlet 111 to the valve outlet 112. In the open positions, fluid is allowed to flow there through. Suitably, the second closing arrangement may have a position in which it is considered as fully open, i.e. providing for a largest defined opening area through the second closing arrangement. The opening degree of the second closing arrangement is suitable controlled in a steeples manner. However, the opening degree may be discretely controlled in steps between the closed position and the fully opened position.

The second closing arrangement may comprise a seat 152 and a closing member 151. The second closing arrangement may in that case be configured to change a variable cross section of a passage between the valve inlet 111 and the valve outlet 112 by means of the closing member 151 acting on the seat 152. The second closing arrangement may alternatively comprise rotary valves, sliding valves, or other arrangements configured to change the variable cross section.

The closing member 151 may be adjustable with an actuating spindle 153 passing through the valve body 110. The actuating spindle 153 may also be called a shaft. The actuating spindle 153 may be turned by hand or by an actuator to force the actuating spindle 153 back and forth to open and close the second closing arrangement. As the second closing arrangement closes, the amount of fluid flowing through the valve arrangement 100 decreases. As the closing arrangement opens, the amount of fluid flowing through the valve arrangement 100 increases.

The valve body 110 may be provided with one or more measuring connections 260 for measuring pressure and/or temperature. A measuring connection 260 may be a measuring channel for receiving a measuring device, such as e.g. a measuring probe. An example of a measuring connection 260 is shown in Figures 4-6.

There is also disclosed herein a fluid distribution system 300 comprising a valve arrangement 100 according to the discussions above. Figure 7 shows a schematic illustration of an example fluid distribution system 300. More specifically, the system of Figure 7 comprises a fluid source 310, such as a liquid tank, and fluid consumption point 320, such as a radiator. Relative to the valve arrangement 100, upstream 311 is between the valve arrangement 100 and the fluid source 310, and downstream 321 is between the valve arrangement 100 and the consumption point 320. Fluid is recirculated from the fluid consumption point 320 to the fluid source 310 via a return path 322.

## Claims

1. A valve arrangement (100) for controlling fluid flow, comprising:
a valve body (110) having a valve inlet (111) and a valve outlet (112), and
a differential pressure controller (120) comprising a movable membrane (121) having a first membrane side (122) and a second membrane side (123) arranged on an opposite side to the first membrane side (122), wherein the first membrane side (122) is arranged in fluid communication with the valve inlet (111), and wherein the second membrane side (123) is arranged in fluid communication with the valve outlet (112), the differential pressure controller (120) further comprising a spring element (124) arranged to exert a force on the movable membrane (121) and arranged to hold the movable membrane (121) in an end position when a differential pressure between the first and the second membrane sides is below a threshold value, wherein the differential pressure controller (120) is configured such that the movable membrane (121) is movable in response to the differential pressure when the differential pressure is above the threshold value, and such that movement of the movable membrane (121) counteracts pressure variations between the valve inlet (111) and a valve outlet (112),
**characterised in that** the valve arrangement (100) further comprises an inspection passage (130) configured to receive fluid from the valve inlet (111) or the valve outlet (112) when the differential pressure is above the threshold value, and wherein the differential pressure controller (120) is configured to close the inspection passage (130) when the differential pressure is below the threshold value, wherein presence of fluid in the inspection passage (130) is indicative of the differential pressure being above the threshold value.

2. The valve arrangement (100) according to claim 1, wherein the inspection passage (130) is configured to guide a flow of fluid from the valve inlet (111) or the valve outlet (112) to an outside of the valve body (110) when the differential pressure is above the threshold value.

3. The valve arrangement (100) according to claim 2, further comprising a sealing member (140) arranged movable between an open position and a closed position, wherein the sealing member (140) in its closed position is configured to prevent fluid flowing out from the valve body (110) via the inspection passage (130), and wherein the sealing member (140) in its open position is configured to allow fluid flowing out from the valve body (110) via the inspection passage (130).

4. The valve arrangement (100) according to claim 3, wherein the sealing member (140) is arranged manually movable between the open position and the closed position.

5. The valve arrangement (100) according to any of claims 3-4, wherein the sealing member (140) is rotatably arranged in the valve body (110).

6. The valve arrangement (100) according to any of claims 3-5, wherein the sealing member (140) comprises a conduit (241) extending through the sealing member (140), wherein the conduit (241) is in fluid communication with the inspection passage (130) when the sealing member (140) is in its open position, and wherein the conduit (241) is fluidly isolated from the inspection passage (130) when the sealing member (140) is in its closed position.

7. The valve arrangement (100) according claim 1, further comprising a movable indicator (141) arranged movable in the inspection passage (130), wherein the movable indicator (141) is arranged in a first position when the differential pressure is above the threshold value and in a second position when the differential pressure is below the threshold value, wherein the position of the movable indicator (141) is configured to provide visual indication from an outside of the valve body (110) of the differential pressure being above the threshold value.

8. The valve arrangement (100) according to any previous claim, wherein the movable membrane (121) when in its end position is arranged to seal a passage inlet (131) of the inspection passage (130).

9. The valve arrangement (100) according to any previous claim, wherein the differential pressure controller (120) comprises a closing arrangement (125) configured to change a variable cross section of a passage between the valve inlet (111) and the valve outlet (112).

10. The valve arrangement (100) according to claim 9, wherein the closing arrangement is a first closing arrangement, and wherein the valve arrangement (100) further comprises a control valve part (150) provided with a second closing arrangement configured to change a variable cross section of passage between the valve inlet (111) and the valve outlet (112).

11. The valve arrangement (100) according to claim 10, wherein the second closing arrangement comprises a seat (152) and a closing member (151), wherein the second closing arrangement is configured to change a variable cross section of a passage between the valve inlet (111) and the valve outlet (112) by means of the closing member (151) acting on the seat (152).

12. The valve arrangement (100) according to any of claims 10-11, wherein the closing member (151) is adjustable with an actuating spindle (153) passing through the valve body (110).

13. The valve arrangement (100) according to any previous claim, wherein the valve body (110) is provided with one or more measuring connections (260) for measuring pressure and/or temperature.

14. A fluid distribution system (300) comprising a valve arrangement (100) according to any of claims 1-13.

## Patentansprüche

1. Ventilanordnung (100) zum Regeln eines Fluidstroms, umfassend:
einen Ventilkörper (110), der einen Ventileinlass (111) und einen Ventilauslass (112) aufweist, und
einen Differenzdruckregler (120), der eine bewegbare Membran (121) umfasst, die eine erste Membranseite (122) und eine zweite Membranseite (123) aufweist, die auf einer gegenüberliegenden Seite der ersten Membranseite (122) angeordnet ist, wobei die erste Membranseite (122) in Fluidkommunikation mit dem Ventileinlass (111) angeordnet ist und wobei die zweite Membranseite (123) in Fluidkommunikation mit dem Ventilauslass (112) angeordnet ist, wobei der Differenzdruckregler (120) ferner ein Federelement (124) umfasst, das dazu angeordnet ist, eine Kraft auf die bewegbare Membran (121) auszuüben, und dazu angeordnet ist, die bewegbare Membran (121) in einer Endposition zu halten, wenn ein Differenzdruck zwischen der ersten und der zweiten Membranseite unterhalb eines Schwellenwerts liegt, wobei der Differenzdruckregler (120) dazu konfiguriert ist, dass die bewegbare Membran (121) als Reaktion auf den Differenzdruck bewegbar ist, wenn der Differenzdruck oberhalb des Schwellenwerts liegt, und dass eine Bewegung der bewegbaren Membran (121) den Druckschwankungen zwischen dem Ventileinlass (111) und einem Ventilauslass (112) entgegenwirkt,
**dadurch gekennzeichnet, dass**
die Ventilanordnung (100) ferner einen Inspektionsdurchlass (130) umfasst, der dazu konfiguriert ist, Fluid von dem Ventileinlass (111) oder dem Ventilauslass (112) zu empfangen, wenn der Differenzdruck oberhalb des Schwellenwerts liegt, und wobei der Differenzdruckregler (120) dazu konfiguriert ist, den Inspektionsdurchlass (130) zu schließen, wenn der Differenzdruck unterhalb des Schwellenwerts liegt, wobei ein Vorhandensein von Fluid in dem Inspektionsdurchlass (130) anzeigt, dass der Differenzdruck oberhalb des Schwellenwerts liegt.

2. Ventilanordnung (100) nach Anspruch 1, wobei der Inspektionsdurchlass (130) dazu konfiguriert ist, einen Fluidstrom von dem Ventileinlass (111) oder dem Ventilauslass (112) zu einer Außenseite des Ventilkörpers (110) zu leiten, wenn der Differenzdruck oberhalb des Schwellenwerts liegt.

3. Ventilanordnung (100) nach Anspruch 2, ferner umfassend ein Abdichtelement (140), das zwischen einer offenen Position und einer geschlossenen Position bewegbar angeordnet ist, wobei das Abdichtelement (140) in seiner geschlossenen Position dazu konfiguriert ist, ein Fluid daran zu hindern, über den Inspektionsdurchlass (130) aus dem Ventilkörper (110) zu strömen, und wobei das Abdichtelement (140) in seiner offenen Position dazu konfiguriert ist, es einem Fluid zu ermöglichen, über den Inspektionsdurchlass (130) aus dem Ventilkörper (110) zu strömen.

4. Ventilanordnung (100) nach Anspruch 3, wobei das Abdichtelement (140) zwischen der offenen Position und der geschlossenen Position manuell bewegbar angeordnet ist.

5. Ventilanordnung (100) nach einem der Ansprüche 3-4, wobei das Abdichtelement (140) drehbar in dem Ventilkörper (110) angeordnet ist.

6. Ventilanordnung (100) nach einem der Ansprüche 3-5, wobei das Abdichtelement (140) eine Leitung (241) umfasst, die sich durch das Abdichtelement (140) erstreckt, wobei die Leitung (241) in Fluidkommunikation mit dem Inspektionsdurchlass (130) steht, wenn sich das Abdichtelement (140) in seiner offenen Position befindet, und wobei die Leitung (241) fluidisch von dem Inspektionsdurchlass (130) isoliert ist, wenn sich das Abdichtelement (140) in seiner geschlossenen Position befindet.

7. Ventilanordnung (100) nach Anspruch 1, ferner umfassend einen bewegbaren Indikator (141), der bewegbar in dem Inspektionsdurchlass (130) angeordnet ist, wobei der bewegbare Indikator (141) in einer ersten Position angeordnet ist, wenn der Differenzdruck oberhalb des Schwellenwerts liegt, und in einer zweiten Position angeordnet ist, wenn der Differenzdruck unterhalb des Schwellenwerts liegt, wobei die Position des bewegbaren Indikators (141) dazu konfiguriert ist, eine visuelle Anzeige von einer Außenseite des Ventilkörpers (110) bereitzustellen, dass der Differenzdruck oberhalb des Schwellenwerts liegt.

8. Ventilanordnung (100) nach einem der vorhergehenden Ansprüche, wobei die bewegbare Membran (121), wenn sie sich in ihrer Endposition befindet, dazu angeordnet ist, einen Durchgangseinlass (131) des Inspektionsdurchlasses (130) abzudichten.

9. Ventilanordnung (100) nach einem der vorhergehenden Ansprüche, wobei der Differenzdruckregler (120) eine Verschlussanordnung (125) umfasst, die dazu konfiguriert ist, einen variablen Querschnitt eines Durchgangs zwischen dem Ventileinlass (111) und dem Ventilauslass (112) zu ändern.

10. Ventilanordnung (100) nach Anspruch 9, wobei die Verschlussanordnung eine erste Verschlussanordnung ist und wobei die Ventilanordnung (100) ferner einen Regelventilteil (150) umfasst, der mit einer zweiten Verschlussanordnung bereitgestellt ist, die dazu konfiguriert ist, einen variablen Querschnitt eines Durchgangs zwischen dem Ventileinlass (111) und dem Ventilauslass (112) zu ändern.

11. Ventilanordnung (100) nach Anspruch 10, wobei die zweite Verschlussanordnung einen Sitz (152) und ein Verschlusselement (151) umfasst, wobei die zweite Ventilanordnung dazu konfiguriert ist, einen variablen Querschnitt eines Durchgangs zwischen dem Ventileinlass (111) und dem Ventilauslass (112) mittels des Verschlusselements (151), das auf den Sitz (152) einwirkt, zu ändern.

12. Ventilanordnung (100) nach einem der Ansprüche 10-11, wobei das Verschlusselement (151) mit einer Betätigungsspindel (153), die durch den Ventilkörper (110) verläuft, anpassbar ist.

13. Ventilanordnung (100) nach einem der vorhergehenden Ansprüche, wobei der Ventilkörper (110) mit einer oder mehreren Messverbindungen (260) zum Messen von Druck und/oder Temperatur bereitgestellt ist.

14. Fluidverteilungssystem (300), umfassend eine Ventilanordnung (100) nach einem der Ansprüche 1-13.

## Revendications

1. Agencement de vanne (100) pour réguler l'écoulement d'un fluide, comprenant :
un corps de vanne (110) ayant une entrée de vanne (111) et une sortie de vanne (112), et
un régulateur de pression différentielle (120) comprenant une membrane mobile (121) présentant un premier côté de membrane (122) et un second côté de membrane (123) agencé sur un côté opposé au premier côté de membrane (122), dans lequel le premier côté de membrane (122) est en communication fluidique avec l'entrée de vanne (111) et le second côté de membrane (123) est en communication fluidique avec la sortie de vanne (112), le régulateur de pression différentielle (120) comprenant en outre un élément de ressort (124) agencé pour exercer une force sur la membrane mobile (121) et pour maintenir la membrane mobile (121) dans une position finale lorsqu'une pression différentielle entre les premier et second côtés de membrane est inférieure à une valeur seuil, dans lequel le régulateur de pression différentielle (120) est configuré de telle sorte que la membrane mobile (121) est mobile en réponse à la pression différentielle lorsque la pression différentielle est supérieure à la valeur seuil, et de telle sorte que le mouvement de la membrane mobile (121) contrecarre les variations de pression entre l'entrée de vanne (111) et une sortie de vanne (112), **caractérisé en ce que**
l'agencement de vanne (100) comprend en outre un passage d'inspection (130) configuré pour recevoir du fluide de l'entrée de vanne (111) ou de la sortie de vanne (112) lorsque la pression différentielle est supérieure à la valeur seuil, et dans lequel le régulateur de pression différentielle (120) est configuré pour fermer le passage d'inspection (130) lorsque la pression différentielle est inférieure à la valeur seuil, la présence de fluide dans le passage d'inspection (130) indiquant que la pression différentielle est supérieure à la valeur seuil.

2. Agencement de vanne (100) selon la revendication 1, dans lequel le passage d'inspection (130) est configuré pour guider un écoulement de fluide depuis l'entrée de vanne (111) ou la sortie de vanne (112) vers l'extérieur du corps de vanne (110) lorsque la pression différentielle est supérieure à la valeur seuil.

3. Agencement de vanne (100) selon la revendication 2, comprenant en outre un élément d'étanchéité (140) agencé de manière mobile entre une position ouverte et une position fermée, l'élément d'étanchéité (140) dans sa position fermée étant configuré pour empêcher le fluide de s'écouler hors du corps de vanne (110) via le passage d'inspection (130), et l'élément d'étanchéité (140) dans sa position ouverte étant configuré pour permettre au fluide de s'écouler hors du corps de vanne (110) via le passage d'inspection (130).

4. Agencement de vanne (100) selon la revendication 3, dans lequel l'élément d'étanchéité (140) est agencé de manière à pouvoir être déplacé manuellement entre la position ouverte et la position fermée.

5. Agencement de vanne (100) selon l'une quelconque des revendications 3 à 4, dans lequel l'élément d'étanchéité (140) est agencé de manière rotative dans le corps de vanne (110).

6. Agencement de vanne (100) selon l'une quelconque des revendications 3 à 5, dans lequel l'élément d'étanchéité (140) comprend un conduit (241) s'étendant à travers l'élément d'étanchéité (140), dans lequel le conduit (241) est en communication fluidique avec le passage d'inspection (130) lorsque l'élément d'étanchéité (140) est dans sa position ouverte, et dans lequel le conduit (241) est isolé fluidiquement du passage d'inspection (130) lorsque l'élément d'étanchéité (140) est dans sa position fermée.

7. Agencement de vanne (100) selon la revendication 1, comprenant en outre un indicateur mobile (141) agencé de manière mobile dans le passage d'inspection (130), l'indicateur mobile (141) étant agencé dans une première position lorsque la pression différentielle est supérieure à la valeur seuil et dans une seconde position lorsque la pression différentielle est inférieure à la valeur seuil, dans lequel la position de l'indicateur mobile (141) est configurée pour fournir une indication visuelle depuis l'extérieur du corps de vanne (110) de la pression différentielle étant supérieure à la valeur seuil.

8. Agencement de vanne (100) selon l'une quelconque des revendications précédentes, dans lequel la membrane mobile (121), lorsqu'elle est dans sa position finale, est agencée pour sceller une entrée de passage (131) du passage d'inspection (130).

9. Agencement de vanne (100) selon l'une quelconque des revendications précédentes, dans lequel le régulateur de pression différentielle (120) comprend un agencement de fermeture (125) configuré pour modifier une section transversale variable d'un passage entre l'entrée de vanne (111) et la sortie de vanne (112).

10. Agencement de vanne (100) selon la revendication 9, dans lequel l'agencement de fermeture est un premier agencement de fermeture, et dans lequel l'agencement de vanne (100) comprend en outre une partie de vanne de commande (150) pourvue d'un second agencement de fermeture configuré pour modifier une section transversale variable de passage entre l'entrée de vanne (111) et la sortie de vanne (112).

11. Agencement de vanne (100) selon la revendication 10, dans lequel le second agencement de fermeture comprend un siège (152) et un élément de fermeture (151), dans lequel le second agencement de fermeture est configuré pour modifier une section transversale variable d'un passage entre l'entrée de vanne (111) et la sortie de vanne (112) au moyen de l'élément de fermeture (151) agissant sur le siège (152).

12. Agencement de vanne (100) selon l'une quelconque des revendications 10 à 11, dans lequel l'élément de fermeture (151) est réglable à l'aide d'une broche d'actionnement (153) traversant le corps de vanne (110).

13. Agencement de vanne (100) selon l'une quelconque des revendications précédentes, dans lequel le corps de vanne (110) est pourvu d'une ou plusieurs connexions de mesure (260) pour mesurer la pression et/ou la température.

14. Système de distribution de fluide (300) comprenant un agencement de vanne (100) selon l'une quelconque des revendications 1 à 13.
